# EUROPEAN PATENT APPLICATION

(11) **EP 0 947 989 A1**
(43) Date of publication of application: **06.10.1999**
(21) Application number: 98106150.0
(22) Date of filing: 03.04.1998
(51) Int. Cl.: G11B 33/04

(54) **Sidewise loading disc jacket**

(71) Applicant: Au, Kam Yan, Kwun Tong, Kowloon (HK)
(72) Inventor: Au, Kam Yan, Kwun Tong, Kowloon (HK)
(74) Representative: COHAUSZ HANNIG DAWIDOWICZ & PARTNER

(57) **Abstract**

A sidewise loading disc jacket, eg a compact disc jacket, is designed to accommodate a disc shaped body which moves in and out the jacket linearly through opening and closing a door hinged at the edge of the jacket.

When the design is adopted for storing compact disc, the size of this jacket can be made identical to the traditional compact disc jacket so that it can be kept in conventional compact disc racks. By doing so, the compact disc can be stored in or taken out from the jacket without removing the jacket from the rack.

In addition, printing material as related to the disc can be accommodated in the space between the body 1 and the transparent U-shaped cover 2 and printed title label can be stored in the space between the edge door 3 and the edge door cover 4.

## Description

This invention relates to a sidewise loading disc jacket

Compact disc jacket is a well-known compact disc container that comprises a front and a back covers with an internal partition for holds the compact disc in a firm position. there opening and closing are in folding style, just like folding a book. It can also accommodate some printing material about the compact disc.
Compact disc jacket is usually store in compact disc rack In such case the compact disc can only be take out by firstly remove the compact disc jacket from the rack and secondly open up the cover by two hands. Under this circumstance, it causes inconvenience to the user because of the need in occupying two hands. In addition, it will be a mess if the compact disc jacket are not properly place back to the rack.

According to the present invention there is provided a sidewise loading disc jacket, a body in the form of a box with one open end and a pivot at the corner, an edge door hinged at the open end of the body, means for guiding the disc in and out of the body automatically while the edge door revolve on the pivot of the body.

A specific embodiment of the invention will now be described by way of example with reference to the accompanying drawing in which :

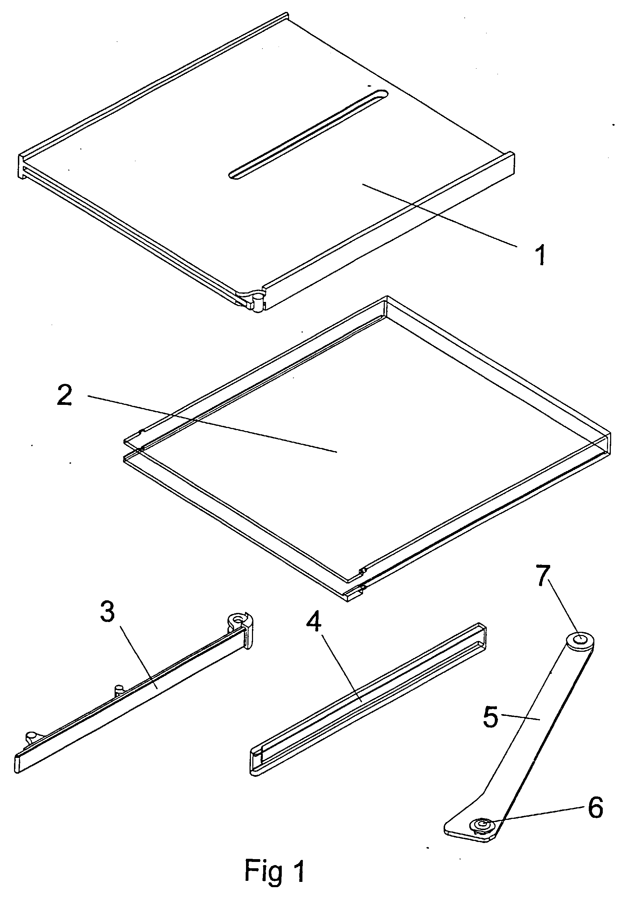

Figure 1 shows in perspective, the components of the sidewise loading disc jacket.
Figure 2 shows the sidewise loading disc jacket in fully opened .
Figure 3 shows the sidewise loading disc jacket in fully closed position.
Figure 4 is a plan view of the sidewise loading disc jacket that illustrates the mechanism of the assembly while the disc 10 shown in the figure is for better understanding purpose and should not be treated as one of the components.

Referring to the drawing, the sidewise loading disc jacket comprises of a body 1 in the form of a box covered by a transparent U-shaped cover 2, an edge door 3 hinged at its corner by the pivot of the body, and a guiding bar 5 connected between the edge door and the body. In addition, a transparent cover 4 is put over the edge door.

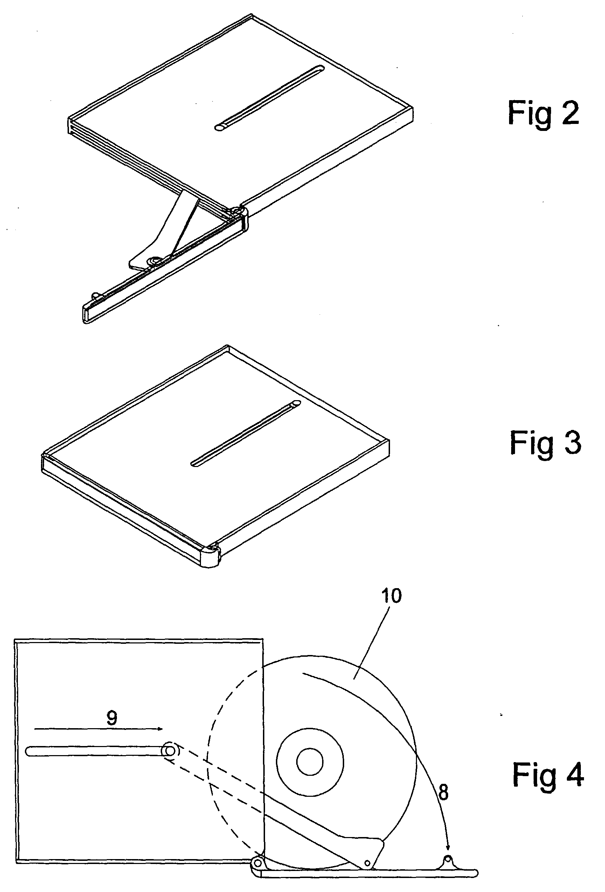

In order to take out the disc from the body, the edge door is fully opened to a position as shown in Fig 2. As the edge door is revolve in the direction of the arrow 8 the guiding bar one end with the guide wheel 7 running along the slot of the body in the direction of the arrow 9 then push out the disc linearly from the body as indicated in Fig 4,

To put the disc back into the body the steps described above are carried out in the reverse sequence

The disc can erect in a proper position before it go into the body or after out form the body that is support by the supporter 6 and the body as shown in fig 4

Some Printing material can be accommodated in the space between the body 1 and the transparent U-shaped cover 2.

Title label can also be accommodated in between the edge door 3 and the transparent edge door cover 4.

## Claims

1. A sidewise loading disc jacket, a body in the form of a box with one open end and a pivot at the corner, an edge door hinged at the open end of the body, means for guiding the disc in and out of the body automatically while the edge door revolve on the pivot of the body.

2. A sidewise loading disc jacket as claimed in Claim 1 wherein guide means are connected between the body and the edge door to control the linear sliding movement of the disc.

3. A sidewise loading disc jacket as claimed in Claim 1 or Claim 2 wherein one end of the guide means slides along the center slot of the body and the other end pivot at a fixed position on the edge door.

4. A sidewise loading disc jacket as claimed in any preceding claim wherein the body is provided with at least one transparent jacket.

5. A sidewise loading disc jacket as claimed in any preceding claim wherein the edge door is provided with a transparent cover.

6. An edge opening disc box substantially as described herein with reference to Figures 1-4 of the accompanying drawing.
